# EUROPEAN PATENT APPLICATION

(11) **EP 4 064 515 A1**
(43) Date of publication of application: **28.09.2022**
(21) Application number: 22164040.2
(22) Date of filing: 24.03.2022
(51) Int. Cl.: H02J 7/00

(54) **BATTERY PROTECT CIRCUIT AND BATTERY MODULE**

(30) Priority: 24.03.2021 TW 110110695
(71) Applicant: YT Electronics Ltd., 111 Taipei City (TW)
(72) Inventor: TSENG, Yu-Ta, 111 Taipei City (TW)
(74) Representative: dompatent von Kreisler Selting Werner - Partnerschaft von Patent- und Rechtsanwälten mbB

(57) **Abstract**

a battery pack comprises a first battery, a second battery and a first current control unit. The first battery has a first anode and a first cathode, wherein a first potential difference is formed between the first anode and the first cathode. The second battery has a second anode electrically coupled with the first cathode, and a second cathode, wherein a second potential difference is formed between the second anode and the second cathode. The first current control unit has a first terminal electrically coupled with the first anode, a second terminal electrically coupled with the first cathode and the second anode, and a third terminal electrically coupled with the second cathode. Wherein when the first potential difference is larger than the second potential difference, a second current flowing through the second battery is larger than a first current flowing through the first battery; when the second potential difference is larger than the first potential difference, the first current is larger than the second current.

## Description

### FIELD OF THE INVENTION

The disclosure is relative to a battery pack and battery pack series structure; in particular, a battery pack and battery pack series structure having electrical balance circuit.

### BACKGROUND OF THE INVENTION

In order to pursue higher convenience and portability, more and more electronic devices will adopt battery configuration. In order to achieve the required voltage and power, many battery cells are integrated into a battery pack through series or parallel. When the battery pack is charged or discharged, the difference of individual battery cells (such as the internal impedance of each battery cells) will lead to different voltages of individual battery cells. It will cause over charge or over discharge of some battery units in a battery pack, which will directly affect the overall life of the battery pack. In some cases (for example, there is no protection circuit or the protection circuit fails), some accidents may be caused by the temperature rise of the battery pack.

During charging and discharging process of a battery pack with electrical balance (such as the balance of voltage or electricity), the balance efficiency of individual battery cell (such as the speed of balancing voltage of individual battery cell) will affect the charging efficiency of the battery pack in the application of high-speed charging. In addition, before and after reaching the voltage balance of individual battery cells, the additional power loss caused by the electric balance setting will also affect the economy of the battery pack. For example, when the battery pack is used to provide high voltage or large power and has more battery cells, the difference between each battery cells will be amplified.

Therefore, how to make the battery pack have better balance efficiency and balance method with less loss will be a major focus in the field of battery research.

### SUMMARY OF THE INVENTION

In an embodiment, a battery pack comprises a first battery, a second battery and a first current control unit. The first battery has a first anode and a first cathode, wherein a first potential difference is formed between the first anode and the first cathode. The second battery has a second anode electrically coupled with the first cathode, and a second cathode, wherein a second potential difference is formed between the second anode and the second cathode. The first current control unit has a first terminal electrically coupled with the first anode, a second terminal electrically coupled with the first cathode and the second anode, and a third terminal electrically coupled with the second cathode. Wherein when the first potential difference is larger than the second potential difference, a second current flowing through the second battery is larger than a first current flowing through the first battery; when the second potential difference is larger than the first potential difference, the first current is larger than the second current.

In an embodiment, a battery pack comprises a first battery, a second battery, a first transistor and a second transistor. The first battery has a first anode and a first cathode, wherein a first potential difference is formed between the first anode and the second cathode. The second battery has a second anode electrically coupled with the first cathode, and a second cathode, wherein a second potential difference is formed between the second anode and the second cathode. The first transistor has a first input end electrically coupled with the first anode and a first output end electrically coupled with the first cathode and the second anode. The second transistor has a second input end electrically coupled with the first output end and a second output end electrically coupled with the second cathode. Wherein when the first potential difference is larger than the second potential difference, the first transistor is conducted, and the second transistor is not conducted; when the second potential difference is larger than the first potential difference, the second transistor is conducted, and the first transistor is not conducted.

In an embodiment, a battery pack series structure comprises a first battery pack, a second battery pack and a current control unit. The first battery pack includes a plurality of batteries connected in series. The first battery pack has a first anode and a first cathode, wherein a first potential difference is formed between the first anode and the first cathode. The second battery pack includes a plurality of batteries connected in series. The second battery pack has a second anode and a second cathode, wherein a second potential difference is formed between the second anode and the second cathode. The current control unit has a first terminal electrically coupled with the first anode, a second terminal electrically coupled with the first cathode and the second anode, and a third terminal electrically coupled with the second cathode. Wherein when the first potential difference is greater than the second potential difference, a second current flowing through the second battery pack is larger than a first current flowing through the first battery pack; when second potential difference is larger than the first potential difference, the first current is larger than the second current.

In an embodiment, a battery pack series structure comprises a first battery pack, a second battery pack, a first transistor and a second transistor. The first battery pack includes a plurality of batteries connected in series. The first battery pack has a first anode and a first cathode, wherein a first potential difference is formed between the first anode and the first cathode. The second battery pack includes a plurality of batteries connected in series. The second battery pack has a second anode and a second cathode, wherein a second potential difference is formed between the second anode and the second cathode. The first transistor has a first input end electrically coupled with the first anode and a first output end electrically coupled with the first cathode and the second anode. The second transistor has a second input end electrically coupled with the first output end and a second output end electrically coupled with the second cathode. Wherein when the first potential difference is larger than the second potential difference, the first transistor is conducted and the second transistor is not conducted; when the second potential difference is larger than the first potential difference, the second transistor is conducted and the first transistor is not conducted.

As described above, the current flowing through individual batteries in the battery pack is adjusted by the current control unit or transistors. The current control unit can adjust the current flowing through the two batteries according to the voltage difference between the two batteries. Through the regulation of current, the battery with smaller voltage can have more current, and when the voltage difference between the two batteries is increased, the current provided to the battery with smaller voltage will increase. In addition, before and after the electric balance of the battery pack, the leak current (for example, the current other than the current used by the battery pack for charging or discharging) will be decrease by the arrangement. Therefore, the energy loss during charging/discharging of the battery pack will be reduce.

### BRIEF DESCRIPTION OF THE DRAWINGS

Figure 1 is a schematic view of the battery pack according to an embodiment of the present invention.
Figure 2 is a schematic view of the current control unit formed by transistors according to an embodiment of the present invention.
Figures 3A-3C are schematic views of the transistor states and current flows according to an embodiment of the present invention.
Figure 4 is a schematic view of the battery pack with other components according to an embodiment of the present invention.
Figures 5A-5B are schematic views of the battery pack with three battery cells according to an embodiment of the present invention.
Figure 6 is a schematic view of the battery pack with four battery cells according to an embodiment of the present invention.
Figures 7A-7B are schematic views of the battery pack series structure according to an embodiment of the present invention.
Figure 8 is a schematic view of the battery pack series structure with multi-level current control units according to an embodiment of the present invention.

### DETAILED DESCRIPTION OF THE PREFERRED EMBODIMENTS

The accompanying drawings are presented to aid in the description of various aspects of the disclosure and are provided solely for illustration of the aspects. In order to simplify the drawings and highlight the contents to be presented in the drawings, the well-known structures or elements in the drawings may be drawn in a simple schematic manner or presented in an omitted manner. For example, the number of elements may be singular or plural. These drawings are provided only to explain these aspects and not to limit thereof.

It should be understood that, even though the terms such as "first" , "second" , "third" may be used to describe an element, a part, a region, a layer and/or a portion in the present specification, but these elements, parts, regions, layers and/or portions are not limited by such terms. Such terms are merely used to differentiate an element, a part, a region, a layer and/or a portion from another element, part, region, layer and/or portion. Therefore, in the following discussions, a first element, portion, region, portion may be called a second element, portion, region, layer or portion, and do not depart from the teaching of the present disclosure. The terms "comprise", "include" or "have" used in the present specification are open-ended terms and mean to "include, but not limit to."

As used herein, the term "coupled to" in the various tenses of the verb "couple" may mean that element A is directly connected to element B or that other elements may be connected between elements A and B (i.e., that element A is indirectly connected with element B).

The terms "about" , "approximate" or "essentially" used in the present specification include the value itself and the average values within the acceptable range of deviation of the specific values confirmed by a person having ordinary skill in the present art, considering the specific measurement discussed and the number of errors related to such measurement (that is, the limitation of the measurement system). For example, "about" may mean within one or more standard deviations of the value itself, or within ±30%, ±20%, ±10%, ±5%. In addition, "about" , "approximate" or "essentially" used in the present specification may select a more acceptable range of deviation or standard deviation based on optical property, etching property or other properties. One cannot apply one standard deviation to all properties.

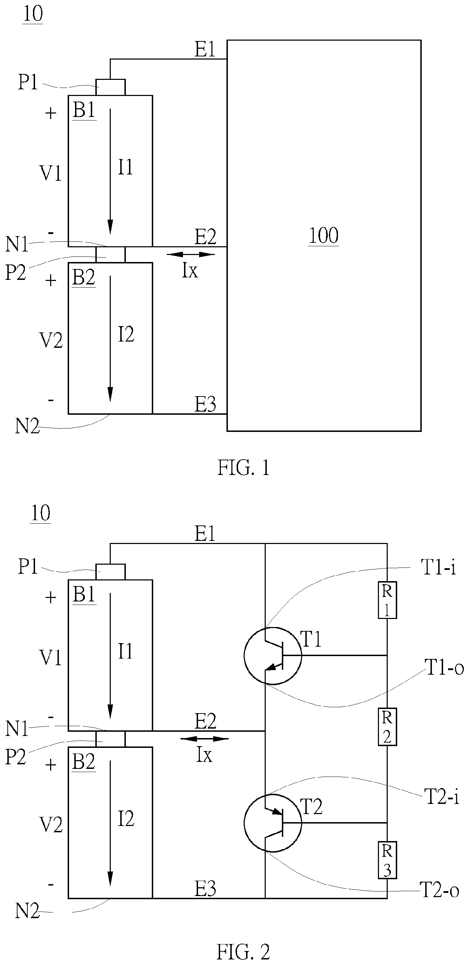

Refer to figure 1, the battery pack 10 comprises the first battery B1, the second battery B2 and the first current control unit 100. The first battery B1 has the first anode P1 and the first cathode N1. The first potential difference V1 is formed between the first anode P1 and the first cathode N1. The second battery B2 has the second anode P2 electrically coupled with the first cathode N1, and a second cathode. In other words, the first battery B1 is connected with the second battery B2 in series. The second potential difference V2 is formed between the second anode P2 and the second cathode N2. The first current control unit 100 has the first terminal E1 electrically coupled with the first anode PI, the second terminal E2 electrically coupled with the first cathode N1 and the second anode PI, and the third terminal E3 electrically coupled with the second cathode N2.

It should be noted that the invention is not limited to the type or model of the first battery B1 and the second battery B2. For example, the first battery B1 and the second battery B2 may be rechargeable batteries, such as nickel-cadmium battery, nickel-hydrogen battery, lithium battery (such as lithium-iron battery or lithium polymer battery). However, the first battery B1 and the second battery B2 are not limited to rechargeable batteries. For example, when the battery pack 10 is only used for discharge applications, the first battery B1 and the second battery B2 can also use disposable batteries. In addition, the first battery B1 and the second battery B2 preferably use batteries of the same specification and/or type, but are not limited to. The first battery B1 and/or the second battery B2 can connect batteries of different specifications in parallel or in series by means of circuit science, so that the first battery B1 and the second battery B2 have similar or the same electrical specifications or characteristic (such as electric quantity, resistance or voltage).

In the embodiment, when the first potential difference V1 is larger than the second potential difference V2, the second current 12 flowing through the second battery B2 is larger than the first current I1 flowing through the first battery B1; when the second potential difference V2 is larger than the first potential difference V1, the first current I1 is larger than the second current 12. More specifically, the first current control unit 100 controls the adjusting current Ix flowing through the second terminal E2 according to the voltage difference between the first terminal E1 and the second terminal E2 (i.e. the first potential difference VI) and voltage difference between the second terminal E2 and the third terminal E3 (i.e. the second potential difference V2). When the first potential difference V1 is larger than the second potential difference V2, the first current control unit 100 controls the adjusting current Ix flowing out from the second terminal E2 to the second battery B2 and adjusts the current Ix according to the value that the first potential difference V1 is larger than the second potential difference V2 to increase the second current 12 flowing through the second battery B2 correspondingly. Similarly, when the second potential difference V2 is larger than the first potential difference V1, the first current control unit 100 controls the adjusting current Ix flowing into the second terminal E2 and adjusts the current Ix according to the value that the second potential difference V2 is larger than the first potential difference V1 to decrease the second current 12 flowing through the second battery B2 correspondingly (e.g. less than the first current I1 flowing through the first battery B1).

In the embodiment, the first current control unit 100 can control the adjusting current Ix according to a first mean value. For example, the first mean value can be derived by averaging the first potential difference V1 and the second potential difference V2 or by other operations. When the first potential difference V1 is larger than the first mean value, the first current control unit 100 controls the adjusting current Ix flowing out from the second terminal E2 to the second battery B2 and adjusts the current Ix according to the value that the first potential difference V1 is larger than the first mean value to increase the second current 12 flowing through the second battery B2 correspondingly. Similarly, when the second potential difference V2 is larger than the first mean value, the first current control unit 100 controls the adjusting current Ix flowing into the second terminal E2 and adjusts the current Ix according to the value that the second potential difference V2 is larger than the first mean value to decrease the second current 12 flowing through the second battery B2 correspondingly. In an embodiment, the first mean value can be half value of the charging voltage provided to the battery pack 10. For example, when the charging voltage provided to the battery pack 10 is 9V, the first mean value can be 4.5V. However, it should be noted that the invention is not limited to the numerical value and calculation method of this embodiment.

The first current control unit 100 may be implemented in a circuit manner. For example, the first current control unit 100 may be implemented on a circuit board (e.g., a printed circuit board or a universal circuit board) in a circuit manner with active elements (e.g., transistors, operational amplifiers, switches or multiplexers) and passive elements (e.g., resistors, inductors or capacitors). In addition, the first current control unit 100 may also include a microprocessor or a field programmable logic gate array (FPGA) to set and/or measure the balance voltage threshold, or regulate the first current I1 and / or the second current 12. In one embodiment, the first current control unit 100 may be integrated into the packaged chip.

In an embodiment, similar to the embodiment shown in figure 1, the first current control unit 100 can be implemented through the combination of the first transistor T1 and the second transistor T2. More specifically, referring to figure 2, the first transistor T1 has the first input end T1-i electrically connected to the first anode PI, and the first output end T1-o electrically connected to the first cathode N1 and the second anode P2. The second transistor T2 has the second input end T2-i electrically connected to the first output end T1-o, and the second output end T2-o electrically connected to the second cathode N2.

More specifically, the first transistor T1 and the second transistor T2 can be bipolar junction transistors (BJT) or field effect transistors (FETs), such as metal-oxide-semiconductor field-effect transistors (MOSFET), junction field effect transistors (JFET) or any other possible field effect transistors. In one embodiment, the first transistor T1 is preferably an n-type transistor and the second transistor T2 is preferably a p-type transistor. In this embodiment, when the first transistor T1 and the second transistor T2 are bipolar junction transistors, the first input end T1-i and the second output end T2-o are collectors, and the first output end T1-o and the second input end T2-i are emitters. It should be noted that the above embodiment is only an example and is not intended to limit the type/arrangement of each end of the first transistor T1 and the second transistor T2 of the present invention. When the first transistor T1 and the second transistor T2 are MOSFETs, the first input end T1-i and the second output end T2-o can correspond to the drain, and the first output end T1-o and the second input end T2-i can correspond to the source. If the first transistor T1 and the second transistor T2 are other transistors, each end of the first transistor T1 and the second transistor T2 can be arranged according the conventional arrangement.

In addition, the invention is not limited to the type of transistors, and the selection of transistors can be adjusted according to the demand. In one embodiment, when a higher adjustment current Ix is required, because the bipolar junction transistor has better current gain, the bipolar junction transistor can be selected. In one embodiment, because the MOSFET has a more mature producing process, which can achieve the advantages of saving area and low power loss, the MOSFET can also be selected.

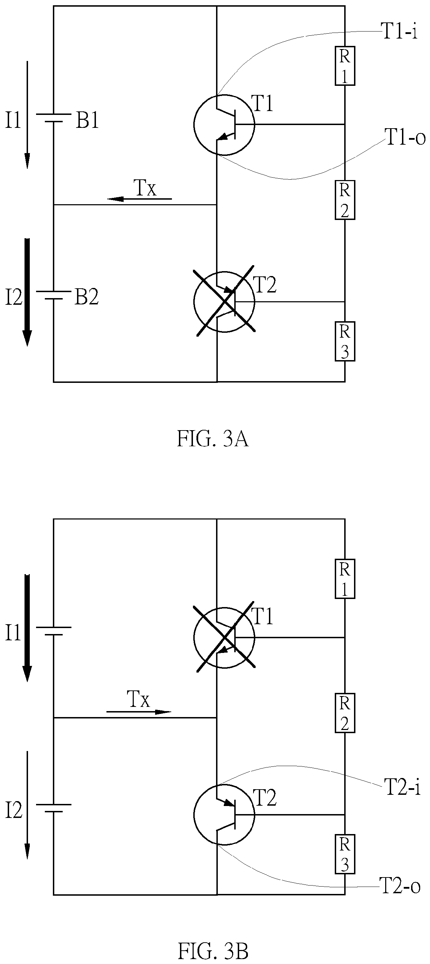

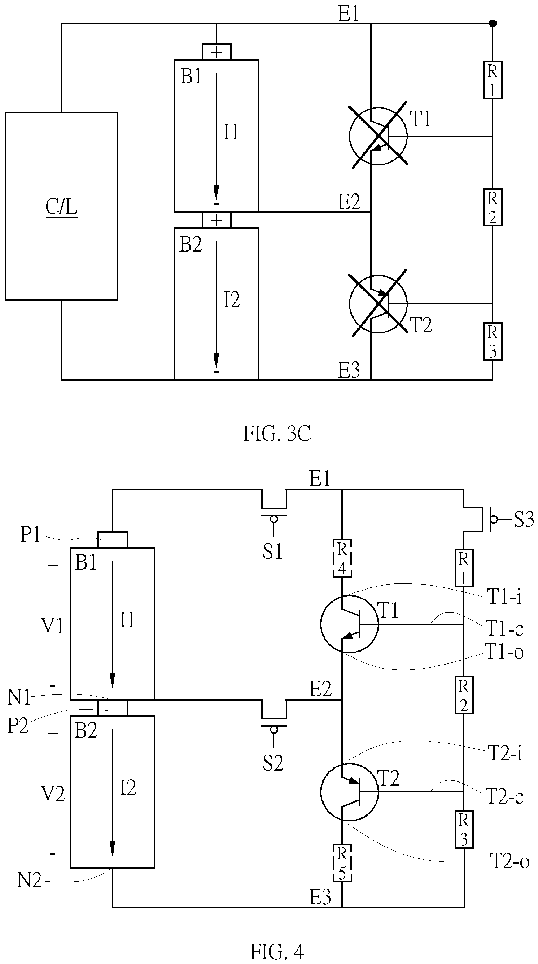

When the first potential difference V1 is larger than the second potential difference V2, as shown in figure 3A, the first transistor T1 is conducted and the second transistor T2 is not conducted. The adjusting current Ix flows out from first output end T1-o of the first transistor T1 to increase the second current 12 and leads the first current I1 is less than the second current 12. When the second potential difference V2 is larger than the first potential difference V1, as shown in figure 3B, the second transistor T2 is conducted and the first transistor T1 is not conducted. The adjusting current Ix flows into the second input end T2-I of the second transistor T2 to decrease the second current 12 and leads the first current I1 is larger than the second current 12. It should be noted that the definition of "not conducted" can be the operation mode of the transistor (taking BJT as an example, the transistor is working in the cut-off mode), the definition of "not conducted" also can be defined by the current flowing through the transistor (for example, the current flowing through the transistor is zero or almost zero). Similarly, the definition of "conducted" can be a BJT working in Active mode or saturation mode, it also can be a transistor with current flow in to/out from the transistor. Continuously, when the first potential difference V1 equal or similar to the second potential difference V2 (the battery pack achieves voltage balance), as shown in figure 3C, the first transistor T1 and the second transistor T2 are not conducted to reduce the energy loss using for balance the battery pack. For example, when the first battery B1 and the second battery B2 reach electrical balance, the first current I1 and the second current 12 will be the same (or similar). In other hands, the battery pack 10 can be charged or discharged through charging terminal C or load L. It should be noted that a battery management system (BMS) (not shown in Fig. 3C) can also be set between the charging terminal C or load L and the battery pack 10 to control the target charging voltage or target discharge voltage of the battery pack 10.

In an embodiment, referring to figure 4, the first transistor T1 further has a first control end T1-c, wherein the first impedance component R1 is arranged between the first input end T1-I and the first output end T1-c. The second transistor T2 further has the second control end T2-c, wherein the third impedance component R3 is arranged between the second control end T2-c and the second output end T2-o. The first transformer T1 and the second transformer T2 can be regulated by the first impedance component R1 and the third impedance component R3 correspondingly. For example, the current flowing into the first control terminal T1-c and the second control terminal T2-c or the terminal voltage of the first control terminal T1-c and the second control terminal T2-c can be controlled by means of circuit. However, the purpose of setting the first impedance component R1 and the third impedance component R3 should not be limited to. Any adjustments made by those skilled in the art should belong to the scope of the present invention. The impedance component can be a carbon film resistor, a chip resistor, a winding resistor or a resistance structure formed by a semiconductor process. It should be understood that the impedance of the invention can include real part resistance (resistance) and imaginary part resistance (impedance), so the impedance element can also be or include passive elements such as inductance or capacitance.

In an embodiment, the second impedance component R2 is arranged between the first control end T1-c and the second control end T2-c. When, for example, conducting voltage of the first transistor T1 and the second transistor T2 are too high or need to adjustment, the condition for conducting the first transistor T1 and the second transistor T2 can be adjusted by the second impedance component R2. For example, if the first transistor T1 and the second transistor T2 are BJT, each of the first transistor T1 and the second transistor T2 has conducting voltage (approx. 0.3V to 0.7V). Hence, the first transistor T1 and the second transistor T2 may not conducting at the same time while the difference between the first potential difference V1 and the second potential difference V2 within a range (e.g., within the conducting voltage). In this case, the voltage range that the first transistor T1 and the second transistor T2 are not conducting can be adjusted by arranging the second impedance component R2 to make the electric balance of the battery pack more efficient. However, the arrangement of the second impedance component R2 is not necessary, for example, if the first transistor T1 and the second transistor T2 are depletion type FET (With channel when VGS = 0V), the value of resistance of the second impedance component R2 can be reduce or the second impedance component R2 can be removed.

In an embodiment, the battery pack 10 may further comprise the first switch S1, the second switch S2 and the third switch S3. The first switch S1 is arranged between the first anode P1and the first terminal E1 (the first input end T1-i of the first transistor T1) of the first current control unit 100. The second switch S2 is arranged between the second anode P2 and the second terminal E2 (the second input end T2-i of the second transistor T2) of the first current control unit 100. The third switch S3 is arranged in the first current control unit 100. In the embodiment shown in figure 4, the third switch S3 can be arranged between the first anode P1 and the first control end T1-c of the first transistor T1. The first switch S1 and the second switch S2 can be turned on or off to adjust the current flowing in/out from the first current control unit 100. The third switch S3 can be turned on or off to control the current inside the first current control unit 100. It should be noted that the first switch S1, the second switch S2 and the third switch S3 can be set individually as required. The invention is not limited to the number and/or setting position of switches. In addition, the battery pack 10 of the invention is not limited to this circuit architecture, and any scope that can be adjusted according to the invention by those with ordinary skilled in the art should belong to the scope of the invention. For example, the battery pack 10 can also arrange the impedance components R4 and R5 on the first input end T1-i and the second output end T2-o. Therefore, the circuit gain of the first transistor T1 and the second transistor T2 can be adjusted.

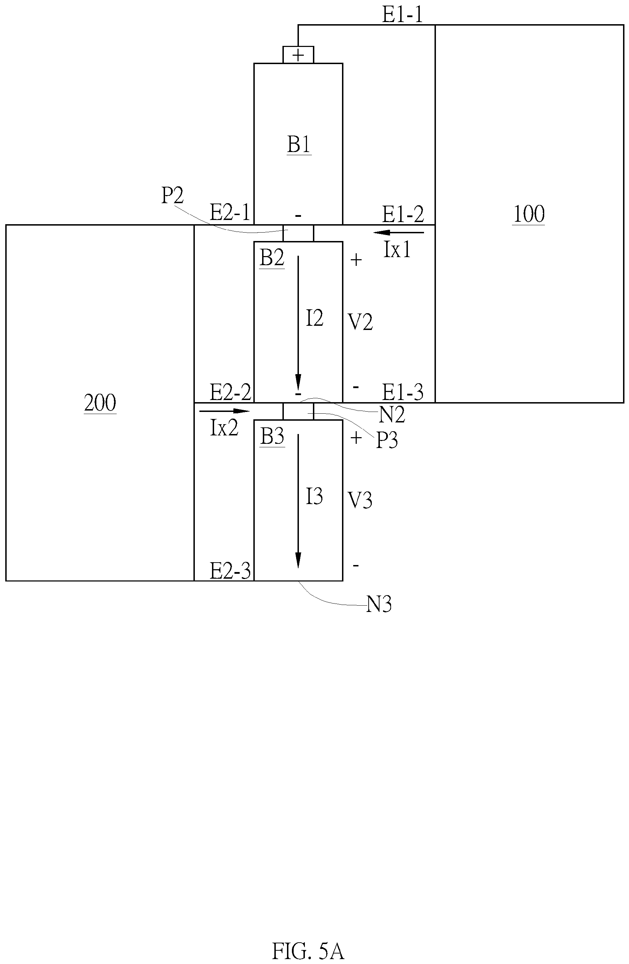

Referring to figure 5A, the battery pack 10 of the present invention may further comprise the third battery B3 and the second current control unit 200. The third battery B3 has the third anode P3 and the third cathode N3 electrically connected to the second cathode N2 of the second battery B2. The third potential difference V3 is formed between the third anode P3 and the third cathode N3. The second current control unit 200 has the fourth terminal E2-1 electrically connected to the first cathode N1 and the second anode P2, the fifth terminal E2-2 electrically connected to the second cathode N2 and the third anode P3, and the sixth terminal E2-3 electrically connected to the third cathode N3. In this embodiment, when the second potential difference V2 is greater than the third potential difference V3, the third current 13 flowing through the third battery B3 will greater than the second current 12. When the third potential difference V3 is greater than the second potential difference V2, the second current 12 will greater than the third current 13. The operation of the second current control unit 200 is similar to the first current control unit 100. The second current control unit 200 is using for adjusting the current flowing through the second battery B2 and the third battery B3 (by adjusting the current Ix2) to balance the voltage /electricity of the second battery B2 and the third battery B3.

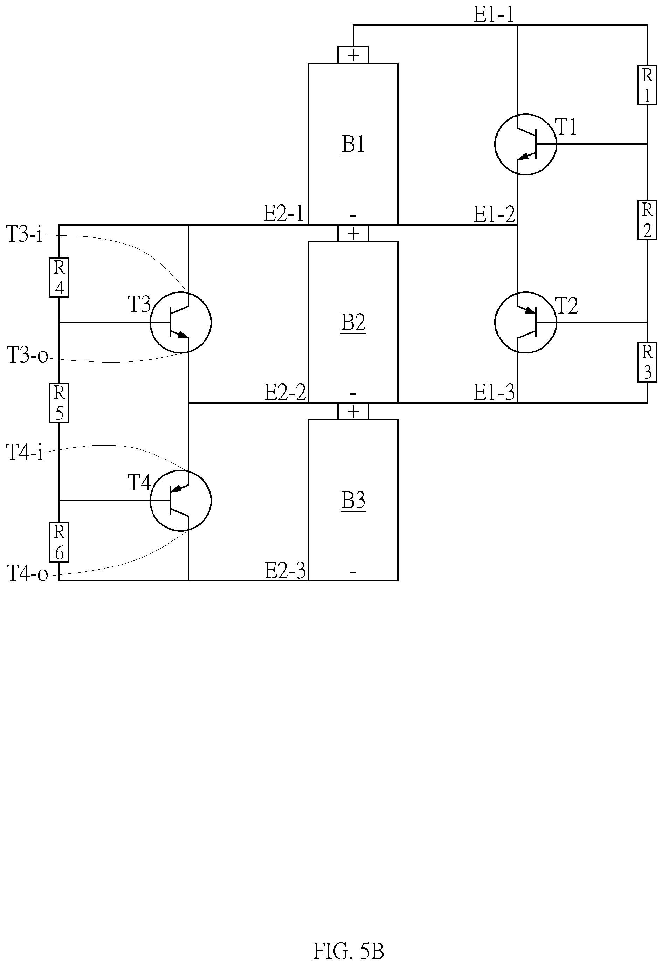

In an embodiment, referring to figure 5B, the second current control unit 200 can be implemented by the combination of the third transistor T3 and the fourth transistor T4. Similar to the first current control unit 100, the third transistor T3 has the third input end T3-i electrically connected to the second anode P2 and the third output end T3-o electrically connected to the second cathode N2 and the third anode P3. The fourth transistor T4 has the fourth input end T4-i electrically connected to the third output end T3-o, and the fourth output end T4-o electrically connected to the third cathode N3.

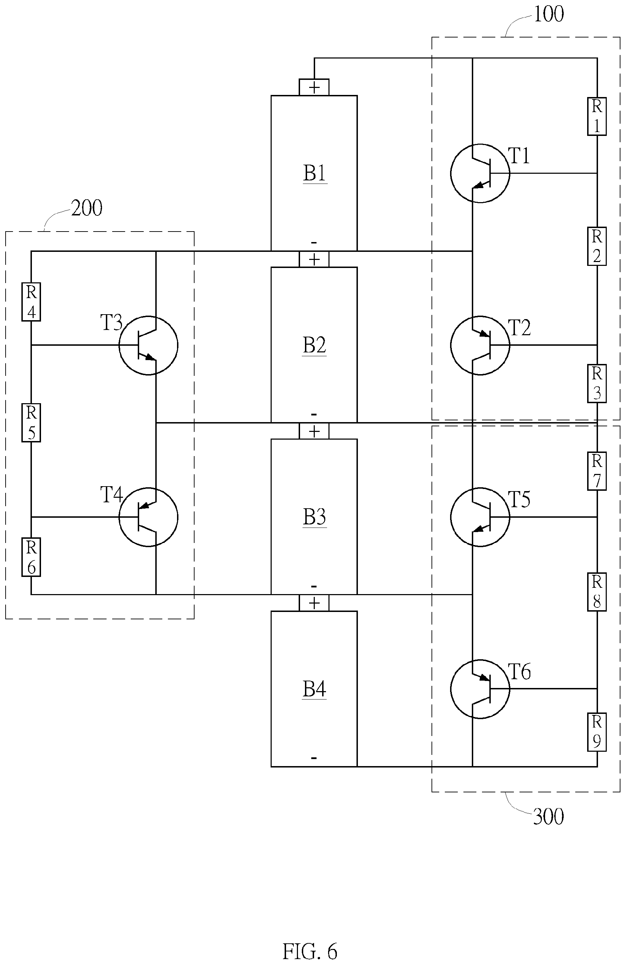

More specifically, the battery pack 10 of the present invention is not limited by the number of batteries and current control units. In an embodiment, if the number of batteries is N and the number of current control units is M, then N = M + 1. Please refer to figure 6, which shows an embodiment in which the number of batteries is equal 4 (N = 4) and the number of current control units is equal 3 (M = 3). Wherein, the electric balance of the first battery B1 and the second battery B2 is controlled by the first current control unit 100; the electric balance of the second battery B2 and the third battery B3 is controlled by the second current control unit 200; the electric balance of the third battery B3 and the fourth battery B4 is controlled by the third current control unit 300. By this setting, when the number of batteries in the battery pack increases, the electric balance between each battery in the battery pack can be controlled by the current control units with the corresponding number.

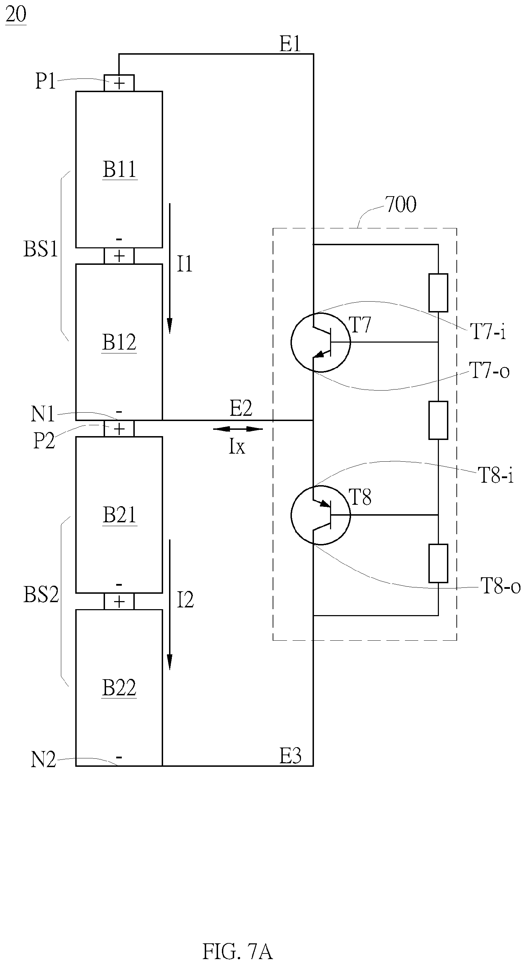

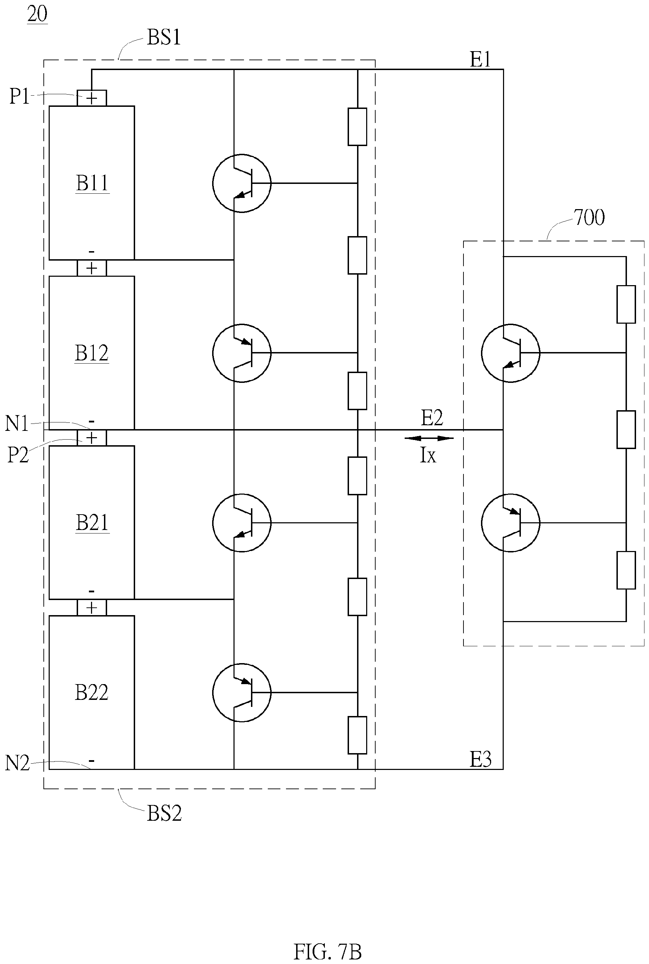

In an embodiment, referring to figure 7A and figure 7b, the battery pack series structure 20 comprises the first battery pack BS1, the second battery pack BS2 and the current control unit 700. The first battery pack BS1 includes a plurality of batteries (B11, B12) connected in series. The first battery pack BS1 has a first anode P1 and a first cathode N1. The second battery pack BS2 includes a plurality of batteries (B21, B22) connected in series. The second battery pack BS2 has the second anode P2 and the second cathode N2. The first potential difference V1 is formed between the first anode P1 and the first cathode N1. The second potential difference V2 is formed between the second anode P2 and the second cathode N2. It should be noted that the battery pack described in this embodiment can refer to the battery pack composed of a conventional plurality of batteries in series / parallel (as shown in figure 7A) or the battery pack with electric balance structure in the above embodiment (as shown in figure 7B). It should be noted that the first battery pack BS1 and the second battery pack BS2 preferably have the same or similar voltage or power in specification. Moreover, the plurality of batteries (B11, B12, B21, B22) in the first battery pack BS1 and the second battery pack BS2 are preferably have the same or similar specification. In addition, although the batteries shown in figure 7A and figure 7B are connected in series, it should be understood that the batteries can achieve similar specifications or power through parallel and/or series. The current control unit 700 has a first terminal E1 electrically connected to the first anode PI, the second terminal E2 electrically connected to the first cathode N1 and the second anode P2, and the third terminal E3 electrically connected to the second cathode N2. Wherein, when the first potential difference V1 is greater than the second potential difference V2, the second current 12 flowing through the second battery pack BS2 is greater than the first current I1 flowing through the first battery pack BS1; when the second potential difference V2 is greater than the first potential difference V1, the first current I1 is greater than the second current 12. More specifically, the operation mode of the current control unit 700 is similar to that of the current control unit 100 and the current control unit 200 mentioned above. The current control unit 100 and the current control unit 200 are used for the electrical balance between two batteries (B1, B2), while the current control unit 700 is used for the electrical balance between two battery packs (BS1, BS2). Compared with the electrical balance between the two batteries, the electrical balance between the two battery packs may require a larger current or power, so the current control unit 700 can select components with higher power or current tolerance. In other words, the current control unit 100 and the current control unit 200 can be regarded as the first stage current control unit, and the current control unit 700 can be regarded as the second stage current control unit. It should be noted that figure 7B is only an exemplary structure and is not intended to limit the invention. The number of first stage current control units (such as current control unit 100 and current control unit 200) for electrical balance between two batteries and second stage current control units (current control unit 700) for electrical balance between two batteries can be adjusted according to needs.

In an embodiment, the current control unit 700 can also be implemented through combination of transistors. The battery pack series structure 20 includes the first battery pack BS1, the second battery pack BS2, the transistor T7 and the transistor T8. The transistor T7 has the input end T7-i electrically connected to the first anode PI, and the output end T7-o electrically connected to the first cathode N1 and the second anode P2. The transistor T8 has an input end T8-i electrically connected to the output end T7-o, and the output end T8-o electrically connected to the second cathode N2. Wherein, when the first potential difference V1 is greater than the second potential difference V2, the transistor T7 is conducting and the transistor T8 is not conducting; when the second potential difference V2 is greater than the first potential difference V1, transistor T8 is conducting and transistor T7 is not conducting.

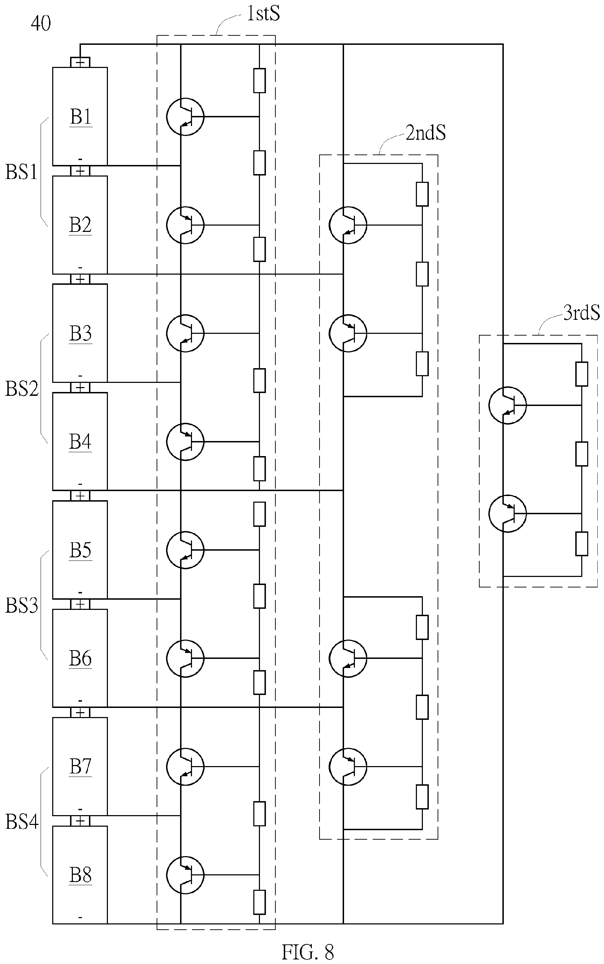

In an embodiment, when the number of battery packs connected in series increases, the battery packs can be balanced by increasing the number of stages of the current control unit. For example, as shown in figure 8, the battery pack series structure 40 has the first battery pack BS1, the second battery pack BS2, the third battery pack BS3 and the fourth battery pack BS4. each of the battery packs BS1-BS4 has a plurality of batteries. Each of two connected batteries in the battery pack can be balanced through the first stage current control unit 1stS. Each of two connected first stage current control units 1stS (it can be regarded as between two battery packs) can be balanced through the second stage current control unit 2ndS. Each of two connected second stage current control units 2ndS can be balanced through the third stage current control unit 3rdS. In this embodiment, the number of battery packs is preferably a power of 2 (such as 2, 4, 8, etc.), but not limited to this. The structure of electric balance can be simplified by increasing the number of stages of current control unit.

The foregoing disclosure is merely preferred embodiments of the present invention and is not intended to limit the claims of the present invention. Any equivalent technical variation of the description and drawings of the present invention of the present shall be within the scope of the claims of the present invention.

## Claims

1. A battery pack, comprising:
a first battery having a first anode and a first cathode, a first potential difference formed between the first anode and the first cathode;
a second battery having a second anode and a second cathode, the second anode electrically coupled with the first cathode, a second potential difference formed between the second anode and the second cathode; and
a first current control unit having a first terminal electrically coupled with the first anode, a second terminal electrically coupled with the first cathode and the second anode, and a third terminal electrically coupled with the second cathode,
wherein when the first potential difference is larger than the second potential difference, a second current flowing through the second battery is larger than a first current flowing through the first battery; when the second potential difference is larger than the first potential difference, the first current is larger than the second current.

2. The battery pack of claim 1, wherein when a value that the first potential difference is larger than the second potential difference is increased, the first current control unit increases the second current

3. The battery pack of claim 1, further comprising:
a third battery having a third anode and a third cathode, the third anode electrically coupled with the second cathode, a third potential difference formed between the third anode and the third cathode; and
a second current control unit having a fourth terminal electrically coupled with the first cathode and the second anode, a fifth terminal electrically coupled with the second cathode and the third anode, and a sixth terminal electrically coupled with the third cathode,
wherein when the second potential difference is larger than the third potential difference, a third current flowing through the third battery is larger than second current; when the third potential difference is larger than the second potential difference, the second current is larger than the third current.

4. The battery pack of claim 1, wherein the first current control unit comprises:
a first transistor having a first input end coupled with the first terminal and a first output end coupled with the second port; and
a second transistor having a second input end coupled with the second terminal and a second output end coupled with the third port.

5. The battery pack of claim 4, wherein the first transistor is an N-type transistor, and the second transistor is a P-type transistor.

6. The battery pack of claim 4, wherein at least one of the first transistor and the second transistor is a bipolar junction transistor (BJT).

7. The battery pack of claim 4, wherein the first transistor further has a first control end, and a first impedance component is arranged between the first input end and the first control end; the second transistor further has a second control end, and a third impedance component is arranged between the second control end and the second output end.

8. The battery pack of claim 7, wherein a second impedance component is arranged between the first control end and the second control end.

9. A battery pack, comprising:
a first battery having a first anode and a first cathode, a first potential difference formed between the first anode and the second cathode;
a second battery having a second anode and a second cathode, the second anode electrically coupled with the first cathode, a second potential difference formed between the second anode and the second cathode;
a first transistor having a first input end electrically coupled with the first anode and a first output end electrically coupled with the first cathode and the second anode; and
a second transistor having a second input end electrically coupled with the first output end and a second output end electrically coupled with the second cathode,
wherein when the first potential difference is larger than the second potential difference, the first transistor is conducted, and the second transistor is not conducted; when the second potential difference is larger than the first potential difference, the second transistor is conducted, and the first transistor is not conducted.

10. The battery pack of claim 9, wherein the first transistor is an N-type transistor, and the second transistor is a P-type transistor.

11. The battery pack of claim 9, wherein at least one of the first transistor and the second transistor is a bipolar junction transistor (BJT).

12. The battery pack of claim 9, wherein the first transistor further has a first control end, and a first impedance component is arranged between the first input end and the first control end; the second transistor further has a second control end, and a third impedance component is arranged between the second control end and the second output end.

13. The battery pack of claim 9, wherein a second impedance component is arranged between the first control end and the second control end.

14. A battery pack series structure, comprising:
a first battery pack including a plurality of batteries connected in series, the first battery pack having a first anode and a first cathode, a first potential difference formed between the first anode and the first cathode;
a second battery pack including a plurality of batteries connected in series, the second battery pack having a second anode and a second cathode, a second potential difference formed between the second anode and the second cathode; and
a current control unit having a first terminal electrically coupled with the first anode, a second terminal electrically coupled with the first cathode and the second anode, and a third terminal electrically coupled with the second cathode,
wherein when the first potential difference is greater than the second potential difference, a second current flowing through the second battery pack is larger than a first current flowing through the first battery pack; when second potential difference is larger than the first potential difference, the first current is larger than the second current.

15. A battery pack series structure, comprising:
a first battery pack including a plurality of batteries connected in series, the first battery pack having a first anode and a first cathode, a first potential difference formed between the first anode and the first cathode;
a second battery pack including a plurality of batteries connected in series, the second battery pack having a second anode and a second cathode, a second potential difference formed between the second anode and the second cathode;
a first transistor having a first input end electrically coupled with the first anode and a first output end electrically coupled with the first cathode and the second anode; and
a second transistor having a second input end electrically coupled with the first output end and a second output end electrically coupled with the second cathode,
wherein when the first potential difference is larger than the second potential difference, the first transistor is conducted and the second transistor is not conducted; when the second potential difference is larger than the first potential difference, the second transistor is conducted and the first transistor is not conducted.
